# EUROPEAN PATENT APPLICATION

(11) **EP 1 865 357 A1**
(43) Date of publication of application: **12.12.2007**
(21) Application number: 07109622.6
(22) Date of filing: 05.06.2007
(51) Int. Cl.: G02B 26/08

(54) **Method, medium, and system generating and/or implementing line profile to compensate for displacement differences in an optical Modulatorm**

(30) Priority: 08.06.2006 KR 20060051589
(71) Applicant: Samsung Electro-Mechanics Co., Ltd., Suwon-city, Gyunggi-do (KR)
(72) Inventor: Bang, You-sun, Gyeonggi-do (KR); Baik, Aron, Gyeonggi-do (KR); Park, Du-sik, Gyeonggi-do (KR)
(74) Representative: Zimmer, Franz-Josef

(57) **Abstract**

A method, medium, and system generating and/or implementing a line profile to compensate for displacement differences in an optical modulator. In the method, a test chart made up of a predetermined number of patches that are arranged at regular gray scale intervals is designed. The designed test chart is displayed using a one-dimensional optical modulator, and the displayed test chart is captured using a camera, thereby acquiring a two-dimensional image. Thereafter, the two-dimensional image is divided into a plurality of regions, and the average value of intensity of light is calculated for each horizontal line of the regions. Finally, a line profile is generated and/or implemented for respective horizontal lines using the calculated average values.

## Description

### CROSS-REFERENCE TO RELATED APPLICATIONS

This application claims priority from Korean Patent Application No. 10-2006-0051589 filed on June 8, 2006 in the Korean Intellectual Property Office, the disclosure of which is incorporated herein by reference in its entirety.

### BACKGROUND OF THE INVENTION

### 1. Field of the Invention

One or more embodiments of the present invention relate to a technology for compensating for displacement differences in an optical modulator, and more particularly, to a method, medium, and system generating and/or implementing a line profile to compensate for displacement differences in an optical modulator.

### 2. Description of the Related Art

In general, optical signal processing has the advantages of high-speed processing, parallel processing and mass information processing, unlike existing digital processing which cannot process a large amount of data or perform real-time data processing. Using spatial optical modulation theory, research into the design and manufacture of binary phase filters, optical logic gates, optical amplifiers, image processing techniques, optical devices and optical modulators has been carried out. Among these devices, the optical modulators have been used in the fields of optical memory, optical displays, printers, optical interconnections and holograms, for example. Accordingly, there has been particular research and development into an optical beam scanning system using such an optical modulator.

The optical beam scanning system operates to scan a light beam in an imaging device (for example, a laser printer, a Light-Emitting Diode (LED) printer, or an electro-photographic copier) to form a spot, for example, on a photosensitive medium, to form an image. Recently, with the development of projection televisions, optical beam scanning systems have been used as a way of radiating/projecting a beam onto an image display.

In such an optical beam scanning system, a one-dimensional optical modulator, which displays images using the diffraction of light, has been used. However, displacement differences between gratings making up a one-dimensional array occur due to the minute misalignments of optical devices generated during the manufacture and processing of the optical modulator, with the result being that artifacts are generated in a horizontal direction when images are projected vertically across a display.

### SUMMARY OF THE INVENTION

Accordingly, the present invention has been made keeping in mind the above conventional problems, such that an aspect of one or more embodiments of the present invention is to provide a method, medium, and system generating and/or implementing a line profile to compensate for displacement differences in an optical modulator. A line profile can be generated by using a two-dimensional image acquired by capturing a test chart using a camera, to create a look-up table for compensating for the line artifact of a display image during implementation using the line profile, thereby improving image quality.

Additional aspects and/or advantages of the invention will be set forth in part in the description which follows and, in part, will be apparent from the description, or may be learned by practice of the invention.

To achieve the above and/or other aspects and advantages, embodiments of the present invention include a method of generating a line profile for a modulation of light, the method including dividing a captured two-dimensional image of a displayed test chart into a plurality of regions, and calculating respective average values of intensities of light for horizontal lines of the regions, and generating a line profile for respective horizontal lines of the regions using the calculated average values to counteract displacement differences between gratings of an optical modulator used for the modulation of the light.

The method may further include designing the test chart as being made up of a predetermined number of patches that are arranged at regular gray scale intervals.

In addition, the method may include displaying the test chart using a one-dimensional optical modulator, as the optical modulator used for the modulation of the light, and capturing a two-dimensional image of the displayed test chart using a camera.

The method may include creating a look-up table, which is used to avoid generation of an artifact in a resultant generated two-dimensional image, output by the optical modulator, using the line profile, and displaying an input image by modulating an input light source through the optical modulator according to the input image and the look-up table to avoid the generation of the artifact.

To achieve the above and/or other aspects and advantages, embodiments of the present invention include a display method, including modulating light according an input image and a line profile controlling the modulating of the light to counteract displacement differences between gratings of a optical modulator used for the modulating of the light, and displaying the modulated light across a screen.

To achieve the above and/or other aspects and advantages, embodiments of the present invention include a display system, including a light source, an optical modulator, and an optical scanner to scan an output of the optical modulator across a screen, wherein the optical modulator modulates light generated by the light source according an input image and a line profile controlling light output by the optical modulator to the optical scanner to counteract displacement differences between gratings of the optical modulator to avoid line artifacts in a resultant displayed image.

To achieve the above and/or other aspects and advantages, embodiments of the present invention include a system for generating a line profile for a modulation of light, including an average value calculation unit to divide a captured two-dimensional image of a displayed test chart into a plurality of regions, and to calculate respective average values of intensities of light for horizontal lines of the regions, and a line profile generation unit to generate a line profile for respective horizontal lines of the regions using the calculated average values to counteract displacement differences between gratings of an optical modulator used for the modulation of the light.

The system may further include a test chart design unit to design the test chart as being made up of a predetermined number of patches that are arranged at regular gray scale intervals.

In addition, the system may include a two-dimensional image acquisition unit to display the test chart using a one-dimensional optical modulator, as the optical modulator used for the modulation of the light, and capturing a two-dimensional image of the displayed test chart using a camera.

The system may include a look-up table creation unit to create a look-up table, which is used to avoid generation of an artifact in a resultant generated two-dimensional image, output by the optical modulator, using the line profile. Still further, the system may include a scanning unit to scan an output of the modulator across a screen by modulating an input light source through the optical modulator according to an input image and the look-up table to avoid the generation of the artifact.

To achieve the above and/or other aspects and advantages, embodiments of the present invention include at least one medium including computer readable code to control at least one processing element to implement one or more embodiments of the present invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates a display system using an optical modulator, according to an embodiment of the present invention;
FIG. 2 illustrates a method of generating and/or implementing a line profile, according to an embodiment of the present invention;
FIG. 3 illustrates a process of randomly arranging patches making up a test chart, according to an embodiment of the present invention;
FIG. 4 illustrates a process of reconstructing a two-dimensional image of a test chart captured by a camera, according to an embodiment of the present invention;
FIG. 5A illustrates a process of creating a camera calibration curve, according to an embodiment of the present invention;
FIG. 5B illustrates a camera calibration curve, such as created through the process of FIG. 5A, according to an embodiment of the present invention;
FIG. 6 illustrates a two-dimensional image divided to calculate an average value of the intensity of light for each horizontal line, according to an embodiment of the present invention;
FIG. 7 illustrates graphical representations of line profiles, according to embodiments of the present invention;
FIG. 8 illustrates images after and before an image is corrected using a line profile, according to an embodiment of the present invention; and
FIG. 9 illustrates a system generating and/or implementing a line profile, according to an embodiment of the present invention.

### DETAILED DESCRIPTION OF THE PREFERRED EMBODIMENTS

Reference will now be made in detail to embodiments of the present invention, examples of which are illustrated in the accompanying drawings, wherein like reference numerals refer to the like elements throughout. Embodiments are described below to explain the present invention by referring to the figures.

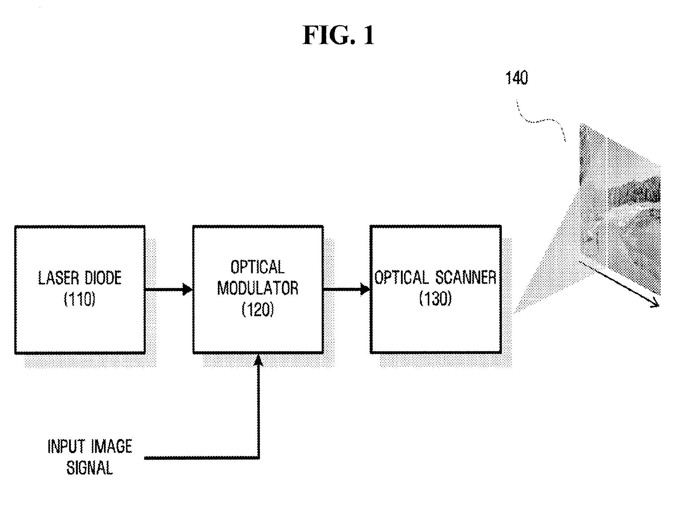

FIG. 1 illustrates a display device/system using an optical modulator, according to an embodiment of the present invention.

Referring to FIG. 1, the display system may include a laser diode 110, an optical modulator 120, and an optical scanner 130, for example.

The laser diode 110 is a device which is widely used in optical communication, optical memory and optical information processing fields. The laser diode 110 includes a p-n junction, and excites a region adjacent to the p-n junction, thereby generating a laser beam. The laser beam generated by the laser diode 110 can then be input to the optical modulator 120 to perform modulation by imposing input video signals on the generated laser beam using the diffraction of light. The optical scanner 130 may then scan video signals, received from the optical modulator 120, onto a scanning target device 140, e.g., a screen. By continuously scanning a single vertical line, e.g., from the left end of the scanning target device 140 to the right end thereof one line at a time, a single frame may be created. Here, while embodiments discussed herein reference the laser diode 110 and the optical scanner 130, it is briefly noted that alternate light sources and projection systems are equally available.

In the optical modulator 120, each of the gratings making up the one-dimensional array of the optical modulator 120 may correspond to a single horizontal line of a frame. Due to the differences in displacement between the gratings making up the one-dimensional array, a line artifact may occur in the horizontal direction of a frame scanned onto the scanning target device 140.

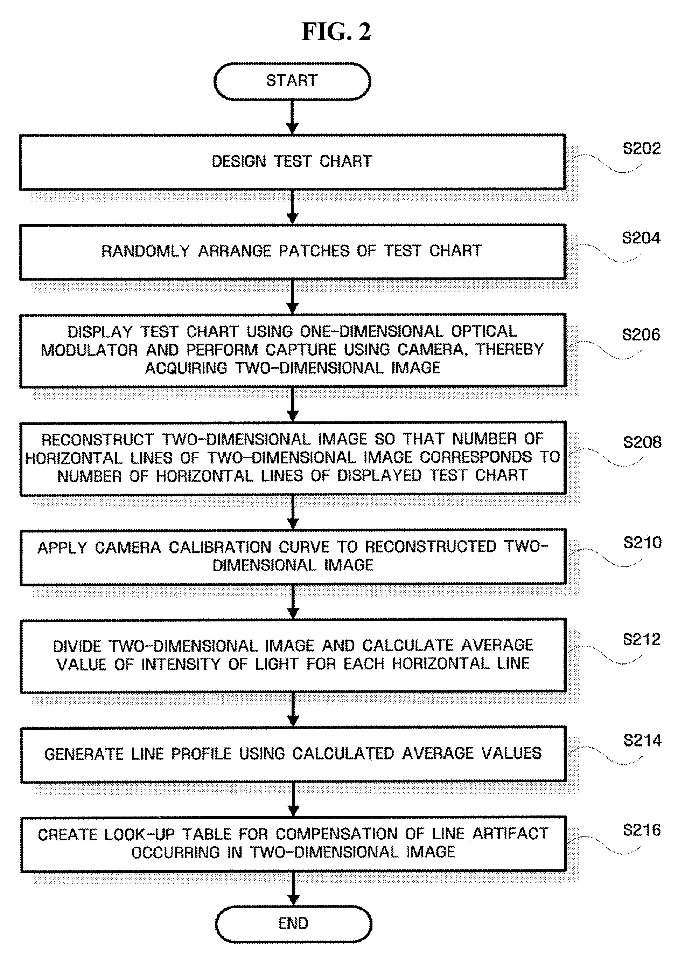

FIG. 2 illustrates a method for generating a line profile, according to an embodiment of the present invention. Here, though not illustrated, methods including implementations of such a line profile are equally available, such as through use of the display system of FIG. 1.

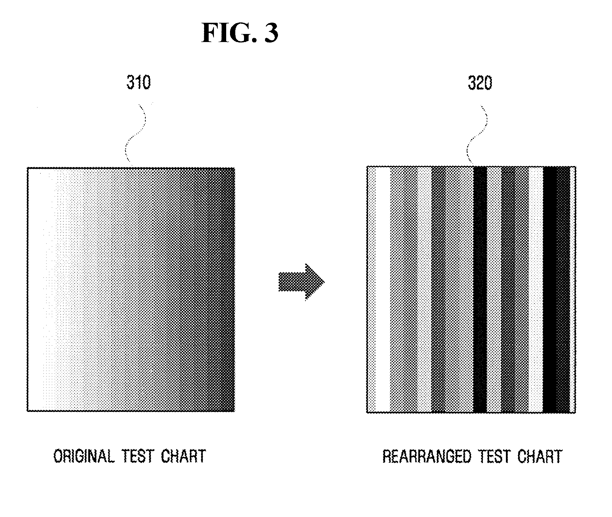

In FIG. 2, in order to measure the light intensities of the optical modulator 120 for respective gray levels, a test chart made up of a plurality of patches may be designed. That is, a test chart, which is made up a specific number of patches arranged at regular gray scale intervals, may be designed, in operation S202. FIG. 3 shows an example designed test chart 310. Furthermore, in order to prevent the patches making up the test chart 310 from being affected by the locations in the gray scale, the patches may not be arranged in order of original gray scale, but may be randomly arranged, thereby creating the illustrated rearranged test chart 320, in operation S204.

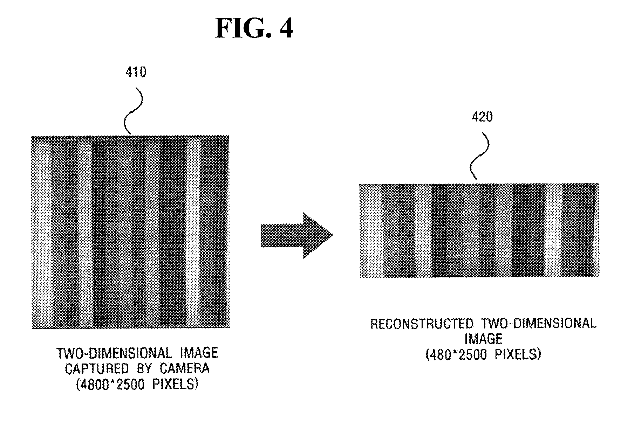

The rearranged test chart 320, may be displayed using the one-dimensional optical modulator 120, and captured using a camera, in operation S206. An example two-dimensional digital image 410 is illustrated in FIG. 4. When the test chart 320 is displayed, clipping is apt to occur chiefly in low gray level portions and high gray level portions. In order to ensure the greatest effective range while preventing clipping from occurring, it is desirable to control the driving voltage of a display device. Furthermore, when capturing is performed using the camera, the focus and resolution of the camera may be controlled, and any auto focus and an auto white balance de-activated, for example.

In addition, when the resolution of the displayed test chart 320 is different from the resolution of the camera or optical pickup, the two-dimensional image may be reconstructed and/or interpolated in such a way that the number of horizontal lines of the two-dimensional image 410 may further be made to correspond to the number of horizontal lines of the displayed test chart 320, in operation S208.

According to one embodiment, a process of reconstructing the two-dimensional image of the test chart captured by the camera can be described with reference to FIG. 4. Referring to FIG. 4, for example, when a test chart having a display resolution of 480 x 640 is captured using a camera having a resolution of 4800 x 2500, ten horizontal lines of the captured image correspond to one horizontal line of the originally displayed test chart. Accordingly, when the test chart, which has a resolution of 480 x 640, is displayed, the locations of the ten horizontal lines corresponding to each of the 480 horizontal lines, where a line artifact occurs, are captured using the camera and are tracked in the captured two-dimensional image 410 having a resolution of 4800 x 2500, and the average value of the ten horizontal lines is calculated, thereby permitting the acquiring of a reconstructed two-dimensional image 420 with a resolution of 480x2500. In this case, it can be seen that the number of vertical pixels of the reconstructed two-dimensional image 420 is reduced by at least half of the number of vertical pixels of the two-dimensional image 410 captured by the camera, while the number of horizontal pixels remains the same.

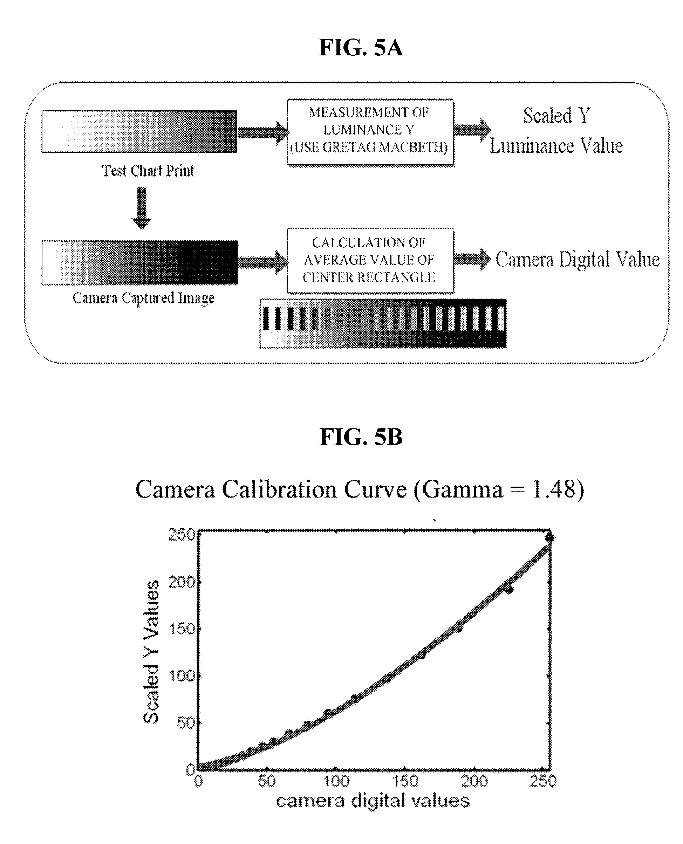

By applying a camera calibration curve to the reconstructed two-dimensional image 420, the influence of the characteristics of the camera can be avoided, in operation S210. FIG. 5A illustrates a process of creating a camera calibration curve, according to an embodiment of the present invention, and FIG. 5B illustrates a camera calibration curve created through a process such as that of FIG. 5A.

Thus, as illustrated in FIG. 5A, luminance values may be measured using a test chart print, arranged at regular gray scale intervals, and a spectrophotometer. In one embodiment, a Gretag MacBeth spectrophotometer is used. After the test chart print is captured using the camera and digital values are acquired by calculating the average values of the center rectangles of respective patches, the camera calibration curve graph shown in FIG. 5B can be created by arranging the luminance values obtained using the spectrophotometer along the vertical axis of a graph and the digital values along the horizontal axis. In the graph, a gamma value is set at 1.48. With this, a line profile with the characteristics of the camera excluded therefrom can be generated.

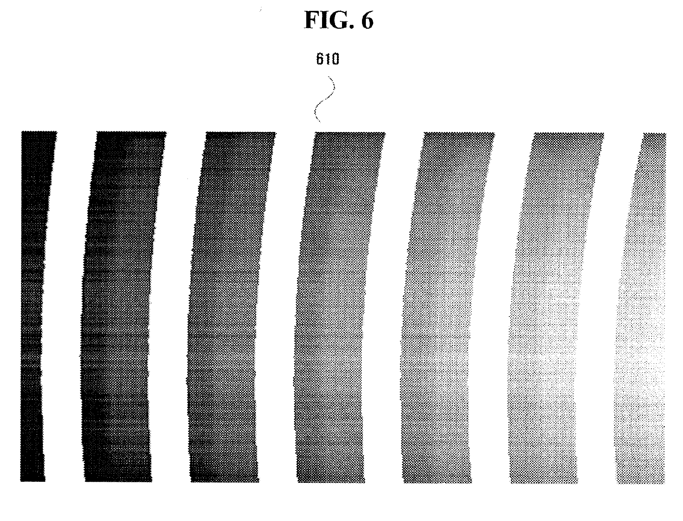

Thereafter, the two-dimensional image 420 to which the camera calibration curve has been applied may be divided into a plurality of regions, and the average value of the intensity of light calculated for respective horizontal lines of the resulting regions, in operation S212. FIG. 6 illustrates an example divided two-dimensional image, divided to calculate the average value of the intensity of light for each horizontal line. Since a high variation in gray scale generally occurs in the edge portion of the two-dimensional image 420, the two-dimensional image 420 may be divided into a plurality of regions using an auto image segmentation technique, for example, and an average value calculated for each horizontal line of the regions 610, thereby calculating the average value of the intensity of light for each gray level.

Thereafter, a line profile may be generated for each horizontal line using the calculated average value of the intensity of light, in operation S214. In an embodiment, noise may be reduced by performing polynomial curve fitting or spline fitting on the generated line profile, and data may be supplemented using interpolation, for example.

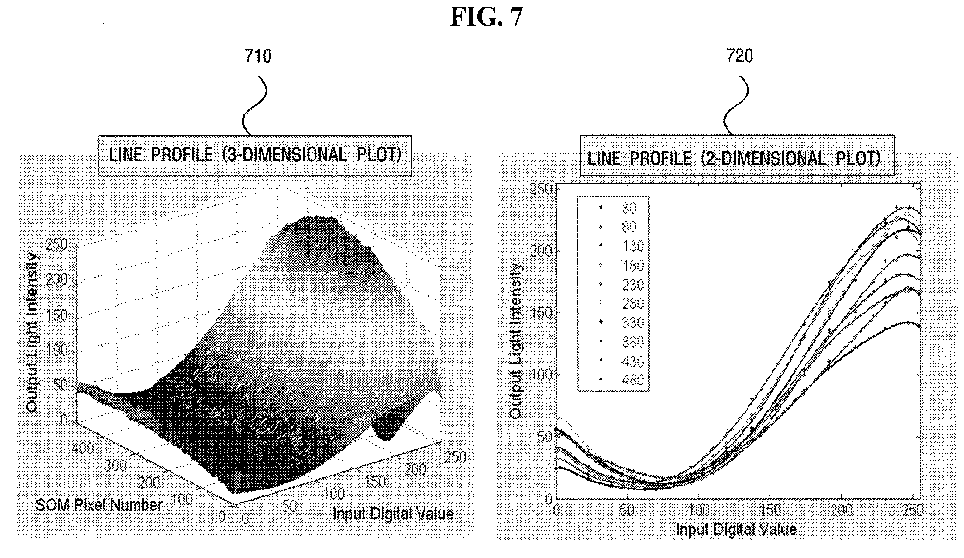

FIG. 7 illustrates two graphs showing line profiles, according to embodiments of the present invention. From the graphs illustrating line profiles, it can be seen that the relationship between gray scale levels (input digital values) input to the one-dimensional optical modulator and the average values of the intensity of light (output light intensities) calculated in FIG. 6 is illustrated for each of the 480 vertical pixels of the two-dimensional image 420 of FIG. 4.

Three-dimensional shape graph 710 of FIG. 7 shows a three-dimensional shape for a total of 480 vertical pixel numbers, with two-dimensional graph 720 showing an extracted two-dimensional graph with only for ten representative examples among a total of 480 pixels, i.e., 30, 80, 130, 180, 230, 280, 330, 380, 430 and 480. From the graphs 710 and 720, it can be seen that 480 respective lines have different sizes and phases, and the inversion of gray occurs in both ends of input gray values (for example, a white region and a black region), while the gray value linearly increases in the central region.

Finally, a look-up table LUT for compensating for a line artifact occurring in the two-dimensional image 420, i.e., a look-up table for avoiding such artifacts, can be created using the line profile, in operation S216. Such a method of creating the look-up table may further include a method of obtaining gray values that reproduce the maximum brightness and minimum brightness of the line profile and calculating slopes and offset values for respective intervals of the line profile, for example, noting that alternative methods for creating such a look-up table are equally available. In addition, as noted above, in view of FIG. 1, illustrating the display system, an implementation of such a line profile through a display method can equally be achieved through applying a corresponding look-up table, for example, when modulating input light from a light source. Such application can be achieved in cooperation with any input signal, for example, before being provided to a modulation unit, or a corresponding modulating unit may apply such corrections after receipt of an input signal.

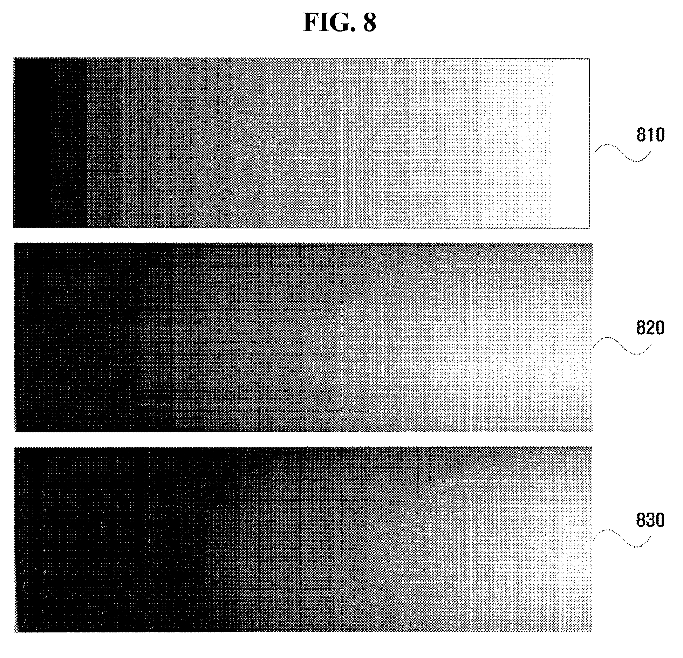

FIG. 8 is a diagram comparing images after and before an image is corrected using a line profile according to an embodiment of the present invention. An image 810 shown in the upper portion of FIG. 8 is an original test chart, an image 820 shown in the central portion thereof is a two-dimensional image acquired by performing a capture using a camera, and an image 830 shown in the lower portion thereof is an image acquired by compensating for a line artifact using the features of the line profile generated according to an embodiment of the present invention. From the image 830, it can be seen that a considerable part of the line artifact existing in a horizontal direction has been eliminated.

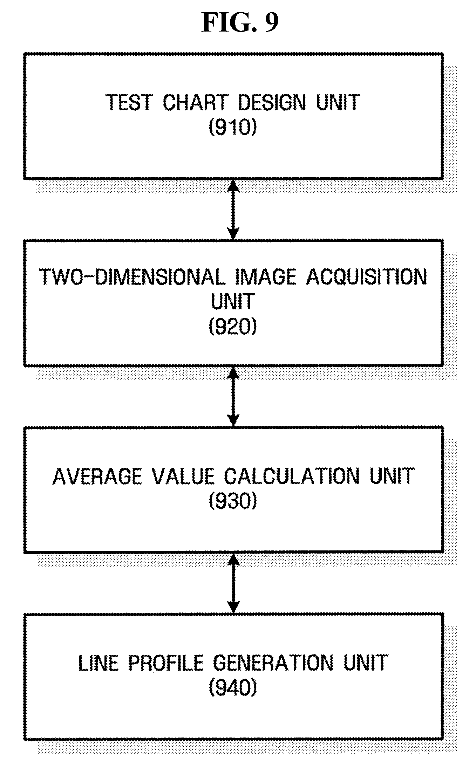

FIG. 9 illustrates a system generating a line profile, according to an embodiment of the present invention. Referring to FIG. 9, the system may include a test chart design unit 910, a two-dimensional image acquisition unit 920, an average value calculation unit 930, and a line profile generation unit 940, for example.

The test chart design unit 910 may design a test chart which is made up of a plurality of patches arranged at regular gray scale intervals. The two-dimensional image acquisition unit 920 may display the designed test chart using a one-dimensional optical modulator and capture the displayed test chart using a camera, thereby acquiring a two-dimensional image.

The average value calculation unit 930 may further divide the two-dimensional image into a plurality of regions, and calculate the average value of the intensity of light for each horizontal line of the regions. The line profile generation unit 940 may then generate a line profile for respective lines using the calculated average values.

A look-up table generation unit (not shown) may still further create a look-up table, which is used to compensate for a line artifact occurring in the two-dimensional image, using the line profile.

Thus, embodiments of the present invention may further include using a display device or system with one-dimensional optical modulators, such as a mobile projector, a mini projector, and a projection TV to compensate for a line artifact occurring in the two-dimensional image, using the line profile.

The term '~unit', as used herein, means, but is not limited to, a software and/or hardware component, such as a Field Programmable Gate Array (FPGA) or Application Specific Integrated Circuit (ASIC), which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The operations provided for in the components and units may be combined into fewer components and units or further separated into additional components and units.

In addition to the above described embodiments, embodiments of the present invention can also be implemented through computer readable code/instructions in/on a medium, e.g., a computer readable medium, to control at least one processing element to implement any above described embodiment. The medium can correspond to any medium/media permitting the storing and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as carrier waves, as well as through the Internet, for example. Thus, the medium may further be a signal, such as a resultant signal or bitstream, according to embodiments of the present invention. The media may also be a distributed network, so that the computer readable code is stored/transferred and executed in a distributed fashion. Still further, as only an example, the processing element could include a processor or a computer processor, and processing elements may be distributed and/or included in a single device.

Thus, according to one or more embodiments of the present invention, a line profile may be generated and/or implemented using a two-dimensional image acquired by capturing a test chart using a camera, and a look-up table, which is used to compensate for the line artifact of a display image, is created and/or used, thereby reducing the line artifact of the display image, and thus improving image quality.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method of generating a line profile for a modulation of light, the method comprising:
dividing a captured two-dimensional image of a displayed test chart into a plurality of regions, and calculating respective average values of intensities of light for horizontal lines of the regions; and
generating a line profile for respective horizontal lines of the regions using the calculated average values to counteract displacement differences between gratings of an optical modulator used for the modulation of the light.

2. The method of claim 1, further comprising designing the test chart as being made up of a predetermined number of patches that are arranged at regular gray scale intervals.

3. The method of claim 2, wherein the designing of the test chart further comprises modifying the test chart such that the patches making up the test chart are randomly arranged such that influences of gray scale locations of the patches are excluded.

4. The method of claim 1, further comprising displaying the test chart using a one-dimensional optical modulator, as the optical modulator used for the modulation of the light, and capturing a two-dimensional image of the displayed test chart using a camera.

5. The method of claim 4, wherein the displaying the test chart and capturing of the displayed test chart further comprises adjusting a driving voltage of a display device while displaying the test chart, and adjusting a focus and resolution of the camera while performing the capturing using the camera.

6. The method of claim 4, wherein the displaying of the test chart and capturing the displayed test chart further comprises reconstructing the two-dimensional image so that a number of horizontal lines of the captured two-dimensional image corresponds to a number of horizontal lines of the displayed test chart, when a resolution of the displayed test chart is different from a resolution of the camera.

7. The method of claim 6, wherein the displaying of the test chart and capturing the displayed test chart further comprises excluding influences of characteristics of the camera by applying a camera calibration curve to the reconstructed two-dimensional image.

8. The method of claim 7, wherein the camera calibration curve represents a relationship between luminance values measured for a predetermined test chart using a spectrophotometer and digital values captured using the camera.

9. The method of claim 7, wherein the dividing of the captured two-dimensional image comprises dividing the two-dimensional image into the plurality of regions using an auto image segmentation technique.

10. The method of claim 7, wherein the generating of the line profile comprises reducing noise by performing a fitting process on the generated line profile.

11. The method of claim 7, wherein the line profile is a graph in which a relationship between gray values input to the one-dimensional optical modulator and values of intensities of light output from the one-dimensional optical modulator is represented for vertical pixel numbers of the test chart.

12. The method of claim 1, further comprising creating a look-up table, which is used to avoid generation of an artifact in a resultant generated two-dimensional image, output by the optical modulator, using the line profile.

13. The method of claim 12, further comprising displaying an input image by modulating an input light source through the optical modulator according to the input image and the look-up table to avoid the generation of the artifact.

14. A display method, comprising:
modulating light according an input image and a line profile controlling the modulating of the light to counteract displacement differences between gratings of a optical modulator used for the modulating of the light; and
displaying the modulated light across a screen.

15. The method of claim 14, further comprising:
designing a test chart as being made up of a predetermined number of patches that are arranged at regular gray scale intervals; and
displaying the test chart using a one-dimensional optical modulator, as the optical modulator used for the modulation of the light, and capturing a two-dimensional image of the displayed test chart using a camera.

16. The method of claim 15, further comprising:
dividing the captured two-dimensional image of the displayed test chart into a plurality of regions, and calculating respective average values of intensities of light for horizontal lines of the regions; and
generating the line profile for respective horizontal lines of the regions using the calculated average values to perform the counteracting of the displacement differences between the gratings of the optical modulator.

17. The method of claim 14, further comprising:
dividing a captured two-dimensional image of a displayed test chart into a plurality of regions, and calculating respective average values of intensities of light for horizontal lines of the regions; and
generating the line profile for respective horizontal lines of the regions using the calculated average values to perform the counteracting of the displacement differences between the gratings of the optical modulator.

18. A display system, comprising:
a light source;
an optical modulator; and
an optical scanner to scan an output of the optical modulator across a screen,
wherein the optical modulator modulates light generated by the light source according an input image and a line profile controlling light output by the optical modulator to the optical scanner to counteract displacement differences between gratings of the optical modulator to avoid line artifacts in a resultant displayed image.

19. The system of claim 18, further comprising:
a test chart design unit to design a test chart as being made up of a predetermined number of patches that are arranged at regular gray scale intervals; and
a two-dimensional image acquisition unit to display the test chart using a one-dimensional optical modulator, as the optical modulator used for the modulation of the light, and to capture a two-dimensional image of the displayed test chart using a camera.

20. The method of claim 19, further comprising:
an average value calculation unit to divide the captured two-dimensional image of the displayed test chart into a plurality of regions, and to calculate respective average values of intensities of light for horizontal lines of the regions; and
a line profile generation unit to generate the line profile for respective horizontal lines of the regions using the calculated average values to perform the counteracting of the displacement differences between the gratings of the optical modulator.

21. A system for generating a line profile for a modulation of light, comprising:
an average value calculation unit to divide a captured two-dimensional image of a displayed test chart into a plurality of regions, and to calculate respective average values of intensities of light for horizontal lines of the regions; and
a line profile generation unit to generate a line profile for respective horizontal lines of the regions using the calculated average values to counteract displacement differences between gratings of an optical modulator used for the modulation of the light.

22. The system of claim 21, further comprising a test chart design unit to design the test chart as being made up of a predetermined number of patches that are arranged at regular gray scale intervals.

23. The system of claim 22, wherein the test chart design unit modifies the test chart such that the patches making up the test chart are randomly arranged such that influences of gray scale locations of the patches are excluded.

24. The system of claim 21, further comprising a two-dimensional image acquisition unit to display the test chart using a one-dimensional optical modulator, as the optical modulator used for the modulation of the light, and capturing a two-dimensional image of the displayed test chart using a camera.

25. The system of claim 24, wherein the two-dimensional image acquisition unit adjusts a driving voltage of a display device while displaying the test chart, and adjusts a focus and resolution of the camera while performing the capturing using the camera.

26. The system of claim 24, wherein the two-dimensional image acquisition unit reconstructs the two-dimensional image so that a number of horizontal lines of the captured two-dimensional image corresponds to a number of horizontal lines of the displayed test chart, when a resolution of the displayed test chart is different from a resolution of the camera.

27. The system of claim 26, wherein the two-dimensional image acquisition unit excludes influences of characteristics of the camera by applying a camera calibration curve to the reconstructed two-dimensional image.

28. The system of claim 27, wherein the camera calibration curve represents a relationship between luminance values measured for a predetermined test chart using a spectrophotometer and digital values captured using the camera.

29. The system of claim 27, wherein the average value calculation unit divides the captured two-dimensional image into the plurality of regions using an auto image segmentation technique.

30. The system of claim 27, wherein the line profile generation unit reduces noise by performing a fitting process on the generated line profile.

31. The system of claim 27, wherein the line profile is a graph in which a relationship between gray values input to the one-dimensional optical modulator and values of intensities of light output from the one-dimensional optical modulator is represented for vertical pixel numbers of the test chart.

32. The system of claim 21, further comprising a look-up table creation unit to create a look-up table, which is used to avoid generation of an artifact in a resultant generated two-dimensional image, output by the optical modulator, using the line profile.

33. The system of claim 32, further comprising a scanning unit to scan an output of the modulator across a screen by modulating an input light source through the optical modulator according to an input image and the look-up table to avoid the generation of the artifact.

34. At least one medium comprising computer readable code to control at least one processing element to implement the method of claim 1.

35. At least one medium comprising computer readable code to control at least one processing element to implement the method of claim 14.
